# EUROPÄISCHE PATENTSCHRIFT

(11) **EP 2 076 737 B1**
(45) Veröffentlichungstag und Bekanntmachung des Hinweises auf die Patenterteilung: **25.01.2012**
(21) Anmeldenummer: 07818434.8
(22) Anmeldetag: 26.09.2007
(51) Int. Cl.: G01D 5/28, G01D 5/347, G05G 9/047

(54) **BEDIENELEMENT FÜR EIN KRAFTFAHRZEUG MIT EINEM IMPULSGEBER**
OPERATING ELEMENT FOR A VEHICLE COMPRISING A PULSE GENERATOR
ELEMENT DE COMMANDE POUR UN VEHICULE AUTOMOBILE AVEC UN GENERATEUR D'IMPULSIONS

(30) Priorität: 05.10.2006 DE 102006047471
(43) Veröffentlichungstag der Anmeldung: 08.07.2009
(73) Patentinhaber: PREH GmbH, 97616 Bad Neustadt (DE)
(72) Erfinder: VORMANN, Dirk, 97616 Bad Neustadt (DE); SCHUBERTH, Stefan, 97616 Bad Neustadt (DE)
(74) Vertreter: Bauer Vorberg Kayser Patentanwälte
(86) Internationale Anmeldenummer: PCT/EP2007/008350
(87) Internationale Veröffentlichungsnummer: WO 2008/040473

(56) Entgegenhaltungen:
- EP-A- 0 838 777
- EP-A- 1 394 652
- WO-A-99/09516
- WO-A-03/088204
- WO-A-2004/059346
- DE-A1- 3 914 235
- FR-A- 2 666 145
- GB-A- 2 215 457
- US-A- 3 886 361
- US-B1- 6 195 083

## Beschreibung

Die Erfindung betrifft ein Bedienelement für ein Kraftfahrzeug bestehend zumindest aus einem drehbar in einem Gehäuse aufgenommenen Bedienknopf und einem Impulsgeber zur Drehrichtungs- und Drehwinkelerkennung, aufweisend eine verdrehfest mit dem Bedienknopf verbundene Lichtverteilung, zumindest eine Lichtquelle und einen Lichtempfänger, wobei das Licht der Lichtquelle mittels der Lichtverteilung an den Lichtempfänger weiterleitbar ist und die Lichtquelle und der Lichtempfänger ein auswertbares Signal generieren, wobei die Lichtverteilung mindestens einen Bereich ausweist, der zumindest teilweise Reflexion des Lichtes in Richtung des Lichtempfängers bewirkt, wobei die Lichtverteilung eine erste und zweite, um ca. 45° und gegensinnig geneigte Reflexionsfläche aufweist, um das Licht der Lichtquelle über die erste und zweite Reflexionsfläche auf den Lichtempfänger (7) zu leiten.

Drehbare Bedienelemente in Kraftfahrzeugen sind allgemein bekannt. Eingesetzt werden solche Bedienelemente, zum Beispiel zur Verstellung der Lautstärke eines Rundfunkempfängers, als Drehknöpfe für die Klimaanlage oder das Gebläse oder als zentrales Bedienelement, wobei dem zentralen Bedienelement mehrere Funktionen zuordbar sind. Um die Drehbewegung des Bedienknopfes des Bedienelementes auswerten zu können, sind verschiedenst aufgebaute Bedienelemente bekannt geworden.

Aus der WO03/088204A ist beispielsweise ein Multi-Achsen-Joystick bekannt, bei dem die Lichtverteilung der Positionsbestimmung des Joysticks dient. Der Multi-Achsen-Joystick weist dabei mindestens ein reflektierendes Element auf, das die Strahlung von einer Strahlungsquelle zu einem Strahlungsdetektor leitet.

Eine Möglichkeit die Drehbewegung des Bedienknopfes eines Bedienelementes zu erfassen, ist in der DE 103 14 315 B4 beschrieben. Mittels einer Lichtverteilung, die verdrehfest am Bedienknopf befestigt ist, ist hierbei eine Kodierung der Drehbewegung mittels einer optoelektronischen Erfassung möglich. Hierbei wird Licht einer Lichtquelle, dass in einen Lichtleiter eingeleitet wird, gleichzeitig in einen Lichtverteiler eingeleitet, wobei sich der Lichtverteiter umfänglich um eine Drehachse des Bedienknopfes speichenförmig erstreckt. Das Licht gelangt somit durch den Lichtleiter in die Lichtverteilung und wird mittels Lichtempfängem empfangen und elektronisch verarbeitet. Durch die Anordnung der Lichtempfänger auf einer unterhalb der Lichtverteilung angeordneten Leiterplatte, ist das Erzeugen eines Gray-Codes möglich, wodurch sowohl Richtung als auch Drehwinkel des Bedienknopfes detektierbar sind.

Aufgabe der Erfindung ist es, ein Bedienelement für ein Kraftfahrzeug bereitzustellen, mittels dem eine Dreh- und Kippbewegung des Bedienknopfes detektierbar ist. Darüber hinaus ist es Aufgabe der Erfindung, ein konstruktiv einfach aufgebautes Bedienelement bereitzustellen, dass darüber hinaus auch kostengünstig zu fertigen ist.

Die Aufgabe wird erfindungsgemäß dadurch gelöst, dass der Bedienknopf kippbar und.drehbar und optional drückbar gelagert ist und dass die Lichteintrittsfläche und die Lichtaustrittsfläche der Lichtverteilung gewölbt ausgeführt sind, sowie dass sich die erste Reflektionsfläche oberhalb der Lichtquelle und die zweite Reflektionsfläche sich oberhalb des Lichtempfängers befinden und dass das von der Lichtquelle emittierte Licht (L) in Richtung der ersten Reflexionsfläche parallelisiert wird. Durch die erfindungsgemäße Ausbildung des Bedienelementes und insbesondere des Impulsgebers im Bedienelement, ist nun die Möglichkeit geschaffen, ein Bedienelement bereitzustellen, das über den Stand der Technik hinaus in der Lage ist, sowohl drehbar wie auch kippbar ist, eine Drehrichtungs- und Drehwinkelerkennung in jeder Stellung des Bedienknopfes zu gewährleisten. Durch den Aufbau einer Lichtverteilung, die zumindest einen Reflexion hervorrufenden Bereich aufweist und die im einfachsten Fall aus einer dünnen Kunststoffscheibe gebildet ist, ist ein konstruktiv einfaches System bereitgestellt, das darüber hinaus auch wirtschaftlich kostengünstig zu fertigen ist.

Gleichzeitig besitzt das erfindungsgemäße aufgebaute Bedienelement den Vorteil der Verwendung von infrarotem Licht, so dass einerseits Störeinflüsse aus der Umgehung oder Streustrahlung von Lichtquellen im Bedienelement die Funktionsfähigkeit des Impulsgebers nicht beeinflussen. In einem einfachsten System, wird der Impulsgeber aus einer abschnittsweise reflektierenden Scheibe gebildet, die verdrehfest mit dem Bedienknopf verbunden ist und die mit Bereichen versehen ist, die einerseits eine Reflexion des Lichtes ermöglichen und andererseits Licht absorbieren. So ist eine Scheibe mit kreissegmentartig verspiegelten Oberflächen und in abwechselnder Reihenfolge hierzu lichtabsorbierende, zum Beispiel schwarze Flächen, aufweist vorstellbar, so dass das Kreissegment aus sich abwechselnden Licht spiegelnden und Licht absorbierenden Flächen gebildet ist. Dabei ist die Scheibe planparallel zu einer im Bedienelement angeordneten Leiterplatte in einem Gehäuse des Bedienelementes angeordnet, wobei die das Lichtschrankensystem bildenden Lichtsender und -empfänger unterhalb der Scheibe angeordnet sind. Zur genauen Auswertung der Drehbewegung, ist es hierbei vorstellbar, die Lichtquelle und den Lichtempfänger radial nach außen hintereinander anzuordnen, so dass sie auf einer rechtwinklig zur Drehachse des Bedienelementes gedachten Linie auf der Leiterplatte und parallel zur Scheibe angeordnet sind.

Vorstellbar ist auch die Scheibe aus Kreisabschnitten, die Segmente bilden und eine Reflexion hervorrufen, auszubilden. Vorstellbar ist hier die Verwendung eines transparenten Kunststoffes, der allein für sich gesehen durch sein Reflexionsvermögen ein Signal im Lichtschrankensystem aus Lichtquelle, Reflexionsfläche und Lichtempfänger zu generieren. In einer vorteilhaften Ausgestaltung der Erfindung, wird darüber hinaus vorgeschlagen in die Lichtverteilung reflektierende Bereiche und das Licht zurückwerfende, leitende Bereiche, so genannte Reflexionsbereiche, einzuarbeiten. Dies erfolgt dadurch, das einerseits ein glassklarer transparenter Kunststoff als Lichtverteilung genommen wird, der allein für sich bereits eine Lichtreflexion hervorruft, und der darüber hinaus mit Lichtleitflächen versehen ist, die das Licht zielgerichtet von der Lichtquelle an eine erste Reflexionsfläche auf eine zweite entgegengesetzt ausgebildete Reflexionsfläche leiten, wodurch das Licht zusätzlich zum reflektierenden Licht zum Lichtempfänger weitergeleitet wird.

Die Lichtverteilung ist direkt an eine Drehachse des Bedienknopfes des Bedienelementes anspritzbar, oder als separates Teil formschlüssig oder kraftschlüssig an die Drehachse des Bedienknopfs anbaubar.

Nachfolgend wird die Erfindung anhand eines Ausführungsbeispiels näher erläutert.

Es zeigt
- Figur 1: eine dreidimensionale Ansicht auf einen prinzipiellen Aufbau eines Impulsgebers in einem Bedienelement für ein Kraftfahrzeug,
- Figur 2: den Verlauf des Lichtes in einem Lichtschrankensystem aus Lichtquelle, Lichtverteilung und Lichtempfänger in einer Detailansicht im Schnitt,
- Figur 3: den Verlauf des Lichtes bei der Betätigung Kippen des Bedienknopfes des Bedienelementes und
- Figur 4: den Verlauf des Lichtes im Impulsgeber bei der Betätigung Drücken des Bedienknopfes.

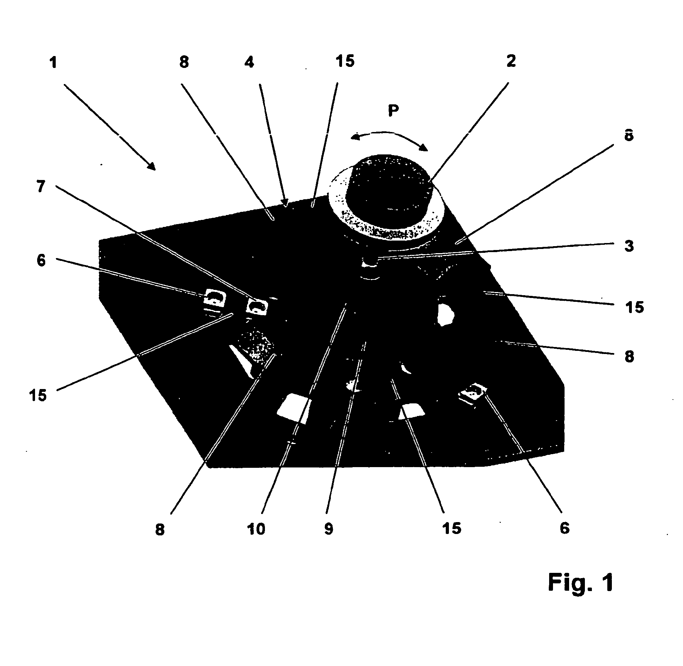

In der Figur 1 ist eine dreidimensionale Ansicht auf einen prinzipiellen Aufbau eines Bedienelementes 1 wiedergegeben. Das Bedienelement 1 besitzt einen Bedienknopf 2, der zumindest bereichsweise aus einem Gehäuse des Bedienelementes 1 herausragt. An den drehbaren im Gehäuse gelagerten Bedienknopf ist eine Mittelachse 3 angeformt oder angebaut, wobei mittels der Mittelachse 4 die Lichtverteilung 5 verdrehfest mit dem Bedienknopf 2 verbunden ist. Unterhalb der Lichtverteilung 4 ist auf einer im Gehäuse gehaltenen Leiterplatte 5 ein aus einer Lichtquelle 6 und einem Lichtempfänger 7 gebildetes Lichtschrankensystem befestigt.

Die Lichtverteilung besteht in diesem Ausführungsbeispiel aus vier einen Kreisabschnitt darstellenden Segmenten 8, die im Wesentlichen planparallel zur Leiterplatte über den Lichtquellen 6 und den Lichtempfängern 7 im Bedienelement 1 drehbar gehalten sind. Gehalten werden die Segmente 8 von einer sich radial von der Mittelachse 3 aus erstreckenden Scheibe 9, die im Wesentlichen die Aufgabe besitzt, die Segmente 8 auf einem einheitlichen Durchmesser über dem Lichtschrankensystem 6, 7, 8 und oberhalb der Lichtquelle 6 und des Lichtempfängers 7 zu halten und zu führen. Die Scheibe 9 kann hierbei aus einem beliebigen Werkstoff gefertigt sein, wobei die Scheibe 9 bevorzugt aus einem Kunststoff gefertigt ist. An die Scheibe 9 ist eine zylindrische Verlängerung 10 angeformt, die einerseits die Lichtverteilung 4 in ihrer Position um die Mittelachse hält und gleichzeitig als Lagerung für den Bedienknopf 2 dient.

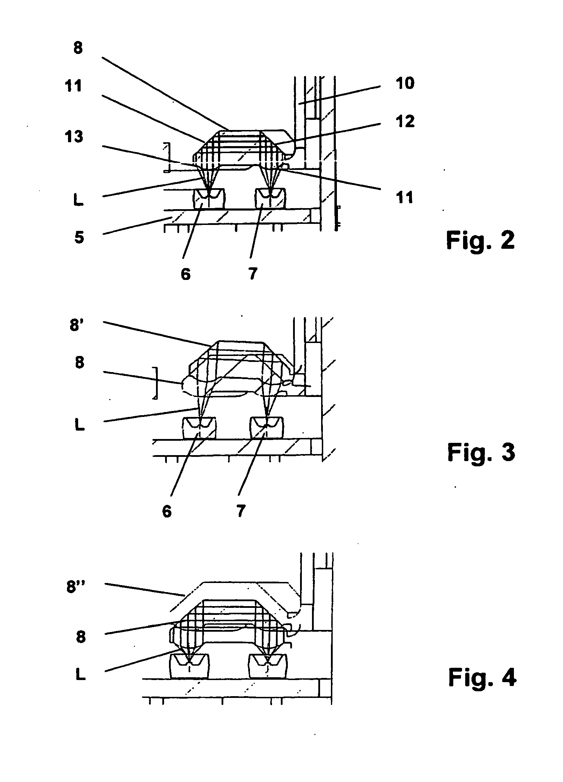

Die Segmente 8 besitzen in dieser Ausführungsform eine gezielt ausgebildete Geometrie, die die Funktion des Lichtschrankensystems 6, 7, 8 unterstützt, die aber für die erfindungsgemäße Form lediglich ein bevorzugtes Ausführungsbeispiel darstellt. Ein Querschnitt durch ein Segment 8, die Leiterplatte 5, die Lichtquelle 6 und den Lichtempfänger 7 ist in der Figur 2 wiedergegeben. Das Segment 8 ist aus zwei um 45° zueinander geneigten Reflexionsflächen 11, 12 sowie einer Lichteintrittsfläche 13 und einer Lichtaustrittsfläche 14 gebildet. Diese spezielle geometrische Querschnittsform des Segments 8, bewirkt einerseits, dass das von der Lichtquelle 6, die beispielsweise eine Licht im infraroten Bereich emittierende LED ist, emittierte Licht L in Richtung der Reflexionsfläche 11 parallelisiert wird und dient gleichzeitig als Reflexionsfläche 13, wodurch ebenfalls ein Signal im Lichtschrankensystem 6, 7, 8 generierbar ist. Das parallelisierte Licht L wird von der Reflexionsfläche 11 in Richtung der zweiten Reflexionsfläche 12 geleitet, von wo aus es in Richtung des Lichtempfängers 7, die beispielsweise eine Fotodiode ist, geleitet wird. In diesem Ausführungsbeispiel sind die Lichteintrittsfläche 13 und die Lichtaustrittsfläche 14 gewölbt ausgeführt, so dass sie das Licht L einerseits parallelisieren und andererseits fokussieren, so dass eine eindeutige Auswertung und Generierung eines Signals ermöglicht ist.

Zu beachten bleibt hierbei, dass die in der Figur 1 dargestellte Ausführungsform der Kreisabschnittssegmente 8 lediglich eine Ausführungsform darstellt. Es ist erfindungsgemäß ebenso vorstellbar, die Lichtverteilung 4 aus einer Kreisscheibe auszubilden, die mit Reflektionsflächen und des Licht absorbierenden Flächen versehen ist. Die Ausbildung der Lichtverteilung 4 gemäß dem Ausführungsbeispiel bietet den Vorteil, dass eine Streustrahlung auf nicht reflektierende Bereiche einer Lichtverteilung nicht zu Fehlern beim Auswerten der erzeugten Signale führt.

Eine weitere vorteilhafte Ausführungsform der Erfindung wird dadurch gebildet, dass die Reflexionsflächen 11, 12 beschichtet ausgeführt sind. Werden die Reflexionsflächen 11, 12 beschichtet, zum Beispiel lackiert oder verspiegelt ausgeführt, so wird die Lichtleitung im Inneren des Segments 8 erhöht, was wiederum zu einer Erhöhung der Sicherheit bei der Generierung eines Signals beim Drehen des Bedienknopfs 2 führt. Es ist aber ebenso vorstellbar, die Segmente 8 an ihrer Unterseite 13, 14 verspiegelt auszuführen, so dass das Licht L unmittelbar von der Fläche 13 in Richtung des Lichtempfängers 7 geleitet wird. Hierzu wäre es selbstverständlich einfacher, die Reflektionsflächen 13, 14 des Segments 8 derart auszuformen, dass das Licht L in Richtung des Lichtempfängers 7 geleitet wird. Als Lichtquelle 6 ist zum Beispiel eine Licht im infraroten Bereich emittierende LED einsetzbar.

Vorteilhaft bei dem in dem Ausführungsbeispiel dargestellten Segment ist, dass auch bei einem Kippen des Bedienknopfes 2 um seine Mittelachse 3 ein Signal generierbar ist. Die Stellung des Segmentes 8 in einer gekippten Position ist in der Figur 3 wiedergegeben. Dabei zeigt die Stellung 8' des Segmentes 8 die Stellung an, die das Segment 8 bei einem Kippen um die Mittelachse 3 einnimmt. Wie deutlich am eingezeichneten Verlauf des Lichtes L von der Lichtquelle 6 durch das Segment 8' zum Lichtempfänger 7 zu erkennen, wird auch in der gekippten Stellung des Bedienknopfes 2 ein Signal generiert und für die Elektronik zur Auswertung bereitgestellt.

Die in der Figur 4 dargestellte Position des Segmentes 8" zeigt die Position an, die das Segment 8 bei einer gedrückten Stellung des Bedienknopfes 2 einnimmt. Es ist deutlich zu erkennen, dass der Verlauf des Lichtes L ebenfalls zu einem generierbaren Signal führt. Der Bedienknopf 2 des Bedienelementes 1 ist somit als Druckknopf, Drehknopf und kippbarer Bedienknopf 2 ausführbar, wobei in jeder Position eine Auswertung der Drehbewegung des Bedienknopfes 2 gewährleistet bleibt. In jeder Position des Bedienknopfes 2, wie sie in den Figuren 2, 3 und 4 dargestellt sind, wird ein Signal generiert, so dass ein Drehen des Bedienknopfs 2 um seine Mittelachse 3 jederzeit auswertbar ist. Durch den erfindungsgemäßen Aufbau ist ein Impulsgeber für ein Bedienelement 1 bereitgestellt, der eine hohe Toleranzunempfindlichkeit aufweist, da durch Reflektion auf den Reflektionsflächen 13 und Reflexion an den Grenzflächen 11, 12 eine Auswertung zu jedem Zeitpunkt und in jeder Stellung des Bedienelementes 2 gewährleistet ist.

Wie in der Figur 1 ersichtlich, sind die Lichtquellen 6 und die Lichtempfänger 7 auf einer sich radial von der Mittelachse erstreckenden Linie hintereinander angeordnet, wodurch, bei einem Verdrehen des Bedienknopfs 2 in Richtung des Pfeils P, die Lichtquelle 6 und der Lichtempfänger 7 gleichzeitig von einem Segment 8 überdeckt werden. Durch eine entsprechende Anordnung der Lichtquelle 6 und des Lichtempfängers 7 in Bezug auf die Segmente ist mittels zweier Lichtquellen 6 und zweier Lichtempfänger 7, wie in der Figur 1 eingezeichnet, ein Gray-Code mit 16 Positionen erzeugbar, so dass einerseits eines Drehrichtung und andererseits ein Drehwinkel des Bedienknopfes 2 detektierbar ist. Auf eine entsprechende Auswertung des Gray-Codes wird auf die Offenbarung der DE 103 14 315 B4 Bezug genommen, wobei ausdrücklich darauf hingewiesen wird, dass deren Offenbarungsgehalt auf die Erfindung anwendbar ist. So ist es insbesondere natürlich vorstellbar, mehr als in dem Ausführungsbeispiel gezeigte Lichtschrankensysteme 6, 7, 8 am Umfang des Bedienknopfes 2 und der Lichtverteilung 4 anzuordnen, um somit zum Beispiel auch die absolute Position des Bedienknopfes 2 zu detektieren.

Die Lichtverteilung 4 wird in dem beschriebenen Ausführungsbeispiel aus Kreissegmentabschnitten 8 und freien Bereichen 15 gebildet. Dies bietet den Vorteil, dass keine Streustrahlung auf den Lichtempfänger 7 fällt. Das Segment 8 wird hierbei bevorzugt aus einem transparenten und transluzenten Kunststoff gebildet. Die Scheibe 9 ist in diesem Ausführungsbeispiel einstöckig an die Segmente 8 angeformt, und ebenfalls aus einem Kunststoff herstellbar. Für die Funktion ist aber entscheidend, dass ein Werkstoff verwendet wird, der eine Reflektion und Reflexion an den Grenzflächen (11, 12, 13, 14) zumindest unterstützt und der sich für ein Leiten des Lichtes eignet.

## Patentansprüche

1. Bedienelement (1) für ein Kraftfahrzeug, bestehend zumindest aus einem drehbar in einem Gehäuse aufgenommenen Bedienknopf (2) und einem Impulsgeber zur Drehrichtungs- und Drehwinkelerkennung, aufweisend eine verdrehfest mit dem Bedienknopf (2) verbundene Lichtverteilung (4), zumindest eine Lichtquelle (6) und einen Lichtempfänger (7), wobei das Licht (L) der Lichtquelle (6) mittels der Lichtverteilung (4) an den Lichtempfänger (7) weiterleitbar ist und Lichtquelle (6) und Lichtempfänger (7) ein auswertbares Signal generieren, wobei die Lichtverteilung (4) mindestens einen Bereich ausweist, der zumindest teilweise Reflexion (13, 14) des Lichtes (L) in Richtung des Lichtempfängers (7) bewirkt, wobei die Lichtverteilung (4) eine erste und zweite, um ca. 45° und gegensinnig geneigte Reflexionsfläche (11, 12) aufweist, um das Licht (L) der Lichtquelle (6) über die erste und zweite Reflexionsfläche (11, 12) auf den Lichtempfänger (7) zu leiten, wobei der Bedienknopf kippbar und drehbar und optional drückbar gelagert ist, **dadurch gekennzeichnet, dass** die Lichteintrittsfläche (13) und die Lichtaustrittsfläche (14) der Lichtverteilung (4) gewölbt ausgeführt sind, sowie dass sich die erste Reflexionsfläche (11) oberhalb der Lichtquelle (6) und die zweite Reflexionsfläche (12) sich oberhalb des Lichtempfängers (7) befinden und dass das von der Lichtquelle (6) emittierte Licht (L) in Richtung der ersten Reflexionsfläche (11) parallelisiert wird.

2. Bedienelement (1) nach Anspruch 1, **dadurch gekennzeichnet, dass** die Lichtquelle (6) Licht (L) im infraroten Bereich emittert

3. Bedienelement (1) nach Anspruch 1 und 2, **dadurch gekennzeichnet, dass** die Lichtverteilung (4) umfänglich um eine Drehachse (3) des Bedienknopfes (2) im Bedienelement (1) angeordnet ist.

4. Bedienelement (1) nach Patentanspruch 1 bis 3, **dadurch gekennzeichnet, dass** die Lichtquelle (6) und der Lichtempfänger (7) auf einer im Gehäuse befestigten Leiterplatte (5) befestigt sind.

5. Bedienelement (1) nach Patentanspruch 4, **dadurch gekennzeichnet, dass** die Lichtquelle (6) und der Lichtempfänger (7) unterhalb der Lichtverteilung (4) auf der Leiterplatte (5) befestigt sind.

6. Bedienelement (1) nach Patentanspruch 4 und 5, **dadurch gekennzeichnet, dass** die Lichtverteilung (4) sich im Wesentlichen rechtwinklig zur Drehachse (3) und planparallel über die Leiterplatte (5) hinweg erstreckt.

7. Bedienelement (1) nach einem der Ansprüche 1 bis 6, **dadurch gekennzeichnet, dass** die Lichtverteilung (4) aus mindestens einem einen Kreisabschnitt bildenden Segment (8) gebildet ist.

8. Bedienelement (1) nach Patentanspruch 7, **dadurch gekennzeichnet, dass** die Lichtverteilung (4) aus vier Kreisabschnittssegmenten (8) gebildet ist, so dass die Lichtverteilung (4) die Form eines Speichenrades mit vier Speichen aufweist.

9. Bedienelement (1) nach einem der Ansprüche 1 bis 8, **dadurch gekennzeichnet, dass** die Lichtverteilung (4) aus einem transparenten Kunststoff gebildet ist.

10. Bedienelement (1) nach einem des Ansprüche 1 bis 9, **dadurch gekennzeichnet, dass** die Lichtverteilung (4) beschichtet ist, wobei die Beschichtung aus einer verspiegelten Fläche oder einem weißen oder silbernen Lack gebildet ist.

11. Bedienelement (1) nach Patentanspruch 10, **dadurch gekennzeichnet, dass** die Lichtverteilung (4) oberhalb der Reflexionsflächen (11, 12) beschichtet ist.

## Claims

1. Operating element (1) for a motor vehicle, comprised of at least one operating button (2) rotatably accommodated in a housing and a pulse generator for rotation direction and rotation angle detection, comprising a light distribution unit (4) non-rotatably connected to the operating button (2), at least one light source (6) and a light receiver (7), wherein the light (L) of the light source (6) can be supplied by means of the light distribution unit (4) to the light receiver (7) and the light source (6) and the light receiver (7) generate a signal that can be evaluated, wherein the light distribution unit (4) comprises at least one area which causes at least partial reflection (13, 14) of the light (L) in the direction of the light receiver (7), wherein the light distribution unit (4) comprises a first and second reflecting surface (11, 12) inclined by about 45° and in the opposite directions in order to conduct the light (L) of the light source (6) via the first and second reflecting surfaces (11, 12) onto the light receiver (7), wherein the operating button is tiltably and rotatably and optionally pressably mounted, **characterised In that** the light entrance surface (13) and the light exit surface (14) of the light distribution unit (4) are configured in a curved manner, and that the first reflecting surface (11) is located above the light source (6) and the second reflecting surface (12) is located above the light receiver (7), and that the light (L) emitted by the light source (6) is parallelised in the direction of the first reflecting surface (11).

2. Operating element (1) according to claim 1, **characterised In that** the light source (6) emits light (L) in the infrared range.

3. Operating element (1) according to claim 1 and 2, **characterised in that** the light distribution unit (4) Is disposed circumferentially about an axis of rotation (3) of the operating button (2) in the operating element (1).

4. Operating element (1) according to claim 1 to 3, **characterised in that** the light source (6) and the light receiver (7) are attached to a circuit board (5) attached in the housing.

5. Operating element (1) according to claim 4, **characterised in that** the light source (6) and the light receiver (7) are attached to the circuit board (5) underneath the light distribution unit (4).

6. Operating element (1) according to claim 4 and 5, **characterised in that** the light distribution unit (4) extends substantially perpendicularly to the axis of rotation (3) and plane-parallel across the circuit board (5).

7. Operating element (1) according to any one of the claims 1 to 6, **characterised in that** the light distribution unit (4) is formed from at least one segment (8) forming a segment of a circle.

8. Operating element (1) according to claim 7, **characterised in that** the light distribution unit (4) is formed from four segments (8) of a circle so that the light distribution unit (4) has the shape of a spoke wheel with four spokes.

9. Operating element (1) according to any one of the claims 1 to 8, **characterised in that** the light distribution unit (4) is formed from a transparent plastic.

10. Operating element (1) according to any one of the claims 1 to 9, **characterised in that** the light distribution unit (4) is coated, the coating being formed from a mirrored surface or a white or silver paint.

11. Operating element (1) according to claim 10, **characterised in that** the light distribution unit (4) is coated above the reflecting surfaces (11, 12).

## Revendications

1. Elément de commande (1) pour un véhicule automobile, se composant au moins d'un bouton de commande (2) reçu à rotation dans un boîtier et d'un générateur d'impulsions pour la détection du sens de rotation et de l'angle de rotation, comprenant une répartition de lumière (4) qui est solidaire en rotation du bouton de commande (2), au moins une source de lumière (6) et un récepteur de lumière (7), la lumière (L) de ladite source de lumière (6) pouvant être transmise au récepteur de lumière (7) au moyen de ladite répartition de lumière (4), et ladite source de lumière (6) ainsi que ledit récepteur de lumière (7) générant un signal apte à être évalué, ladite répartition de lumière (4) présentant au moins une zone qui provoque au moins en partie la réflexion (13, 14) de la lumière (L) en direction dudit récepteur de lumière (7), ladite répartition de lumière (4) comprenant des première et deuxième surfaces de réflexion (11, 12) inclinées d'à peu près 45° et en sens inverse afin de diriger la lumière (L) de ladite source de lumière (6) via lesdites première et deuxième surfaces de réflexion (11, 12) sur le récepteur de lumière (7), ledit bouton de commande étant logé de manière à pouvoir être basculé et tourné et optionnellement poussé, **caractérisé par le fait que** la surface d'entrée de lumière (13) et la surface de sortie de lumière (14) de la répartition de lumière (4) sont réalisées de manière à être bombées, et que ladite première surface de réflexion (11) est située au-dessus de la source de lumière (6) et la deuxième surface de réflexion (12) est située au-dessus du récepteur de lumière (7) et que la lumière (L) émise par la source de lumière (6) est parallélisée en direction de ladite première surface de réflexion (11).

2. Elément de commande (1) selon la revendication 1, **caractérisé par le fait que** la source de lumière (6) émet de la lumière (L) dans l'infrarouge.

3. Elément de commande (1) selon la revendication 1 et 2, **caractérisé par le fait que** ladite répartition de lumière (4) est disposée circonférentiellement autour d'un axe de rotation (3) du bouton de commande (2) dans ledit élément de commande (1).

4. Elément de commande (1) selon la revendication 1 à 3, **caractérisé par le fait que** ladite source de lumière (6) et ledit récepteur de lumière (7) sont fixés sur une carte de circuits imprimés (5) fixée dans ledit boîtier.

5. Elément de commande (1) selon la revendication 4, **caractérisé par le fait que** ladite source de lumière (6) et ledit récepteur de lumière (7) sont fixés au-dessous de ladite répartition de lumière (4) sur ladite carte de circuits imprimés (5).

6. Elément de commande (1) selon la revendication 4 et 5, **caractérisé par le fait que** ladite répartition de lumière (4) s'étend pour l'essentiel à angle droit par rapport à l'axe de rotation (3) et de façon plane et parallèle sur ladite carte de circuits imprimés (5).

7. Elément de commande (1) selon l'une quelconque des revendications 1 à 6, **caractérisé par le fait que** ladite répartition de lumière (4) est formée par au moins un segment (8) formant une section de cercle.

8. Elément de commande (1) selon la revendication 7, **caractérisé par le fait que** ladite répartition de lumière (4) est formée par quatre segments de section de cercle (8) de sorte que la répartition de lumière (4) présente la forme d'une roue à rayons comprenant quatre rayons.

9. Elément de commande (1) selon l'une quelconque des revendications 1 à 8, **caractérisé par le fait que** ladite répartition de lumière (4) est réalisée dans une matière plastique transparente.

10. Elément de commande (1) selon l'une quelconque des revendications 1 à 9, **caractérisé par le fait que** ladite répartition de lumière (4) est revêtue, ledit revêtement étant constitué par une surface métallisée ou par un vernis blanc ou argenté.

11. Elément de commande (1) selon la revendication 10, **caractérisé par le fait que** ladite répartition de lumière (4) est revêtue au-dessus des surfaces de réflexion (11, 12).
